(19) Europäisches Patentamt
European Patent Office
Office européen des brevets

(11) **EP 3 583 032 B1**

(12) **FASCICULE DE BREVET EUROPEEN**

(45) Date de publication et mention
de la délivrance du brevet:
**31.03.2021 Bulletin 2021/13**

(21) Numéro de dépôt: **18706825.9**

(22) Date de dépôt: **14.02.2018**

(51) Int Cl.:
**B64D 31/06** *(2006.01)*        **B64C 27/00** *(2006.01)*

(86) Numéro de dépôt international:
**PCT/FR2018/050358**

(87) Numéro de publication internationale:
**WO 2018/150138 (23.08.2018 Gazette 2018/34)**

(54) **PROCÉDÉ ET SYSTÈME DE COMMANDE D'UN DISPOSITIF D'URGENCE**

VERFAHREN UND SYSTEM ZUR STEUERUNG EINER NOTVORRICHTUNG

METHOD AND SYSTEM FOR CONTROLLING AN EMERGENCY DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.02.2017 FR 1751219**

(43) Date de publication de la demande:
**25.12.2019 Bulletin 2019/52**

(73) Titulaire: **Safran Helicopter Engines
64510 Bordes (FR)**

(72) Inventeurs:
• **Thiriet, Romain
77550 Moissy-Crayamel (FR)**
• **Bazet, Jean Michel
77550 Moissy-Crayamel (FR)**
• **Frealle, Jean-Luc, Charles, Gilbert
77550 Moissy-Crayamel (FR)**
• **Darfeuil, Pierre
77550 Moissy-Crayamel (FR)**

(74) Mandataire: **Gevers & Orès
9 rue St Antoine du T
31000 Toulouse (FR)**

(56) Documents cités:
**EP-A2- 2 404 775     EP-A2- 2 703 292**

## Description

### 1. Domaine technique de l'invention

L'invention concerne un procédé et un système de commande d'un dispositif d'urgence. En particulier, l'invention concerne un procédé et un système de commande d'un dispositif d'urgence d'un hélicoptère, ledit dispositif d'urgence permettant de fournir un complément de puissance propulsive d'urgence à l'hélicoptère.

### 2. Arrière-plan technologique

Les hélicoptères sont des aéronefs équipés d'un rotor entrainé en rotation par au moins un turbomoteur via une boîte de transmission principale (BTP). La sustentation d'un hélicoptère est liée à la rotation du rotor, généralement à une vitesse prédéfinie quasi constante dite vitesse nominale (généralement exprimée en tours par minute).

Lorsque le pilote de l'hélicoptère souhaite un surplus de puissance du turbomoteur, le turbomoteur peut de manière exceptionnelle autoriser un régime transitoire appelé régime PMT20s (pour Puissance Max Transitoire 20s) qui est autorisé pendant 20s sur un hélicoptère monomoteur. Ce régime transitoire est situé quelques pourcents au-dessus de la puissance maximale de décollage (appelée PMD5min).

Or, lors de certaines situations de vol, la vitesse de rotation du rotor peut varier brutalement (par exemple en cas de dégradation des conditions aérologiques : rafale de vent, inversion de température, etc.), le pilote d'un hélicoptère peut être amené à exécuter des actions particulières (par exemple un évitement d'obstacle) ou une charge à transporter peut avoir une masse plus importante qu'estimée. Dans certaines de ces situations, le régime PMT20s peut ne pas être suffisant en niveau.

En outre, en cas d'arrêt en vol commandé ou non commandé du turbomoteur, un complément de puissance propulsive d'urgence peut s'avérer nécessaire en cas de baisse importante de la vitesse de rotation du rotor de l'hélicoptère.

Pour ce faire, une solution trouvée a été de mettre en place des dispositifs de complément de puissance propulsive d'urgence de façon instantanée en cas de baisse importante de la vitesse de rotation du rotor de l'hélicoptère. Par exemple, les dispositifs d'urgence peuvent comprendre un générateur de gaz permettant de produire un gaz pouvant entrainer les turbines d'un turbomoteur de l'hélicoptère et ainsi d'augmenter ponctuellement la puissance disponible. Un mode de réalisation de ces dispositifs d'urgence est par exemple décrit dans la demande FR3019588 A1 du demandeur.

Toutefois, ces dispositifs d'urgence, comme la plupart des équipements équipant les aéronefs, sont soumis à des contraintes de sécurité strictes. En particulier, ces dispositifs d'urgence doivent être activés uniquement quand ils sont nécessaires (pas de déclenchement intempestif). Les inventeurs ont donc cherché une solution pour permettre une commande fiable et simple de ces dispositifs d'urgence. Le document EP 2 703 292 décrit un procédé d'assistance d'un pilote d'un aéronef monomoteur à voilure tournante lors d'une phase de vol en autorotation, ledit aéronef comportant une installation motrice hybride munie d'un moteur thermique, d'une machine électrique et d'une boîte de transmission principale de puissance. Ledit aéronef comporte également un moyen de stockage d'énergie électrique et un rotor principal lié mécaniquement à ladite installation motrice hybride. Selon ledit procédé, on surveille pendant un vol le fonctionnement dudit moteur thermique afin de détecter une panne de celui-ci notamment par l'intermédiaire d'une chute de puissance sur ledit rotor principal, puis lorsqu'une panne dudit moteur thermique est détectée, on commande ladite machine électrique pour fournir une puissance auxiliaire We audit rotor principal, permettant ainsi d'assister un pilote dudit aéronef pour manoeuvrer ledit aéronef lors de ladite phase de vol en autorotation consécutive à ladite panne.

### 3. Objectifs de l'invention

L'invention vise à pallier au moins certains des inconvénients des dispositifs d'urgence connus.

En particulier, l'invention vise à fournir, dans au moins un mode de réalisation de l'invention, un procédé et un système de commande d'un dispositif d'urgence.

L'invention vise aussi à fournir, dans au moins un mode de réalisation, un procédé et un système de commande tolérante aux situations opérationnelles pouvant conduire à des déclenchements intempestifs du dispositif d'urgence.

L'invention vise aussi à fournir, dans au moins un mode de réalisation, un procédé et un système de commande pouvant être intégré à un hélicoptère existant.

L'invention vise aussi à fournir, dans au moins un mode de réalisation de l'invention, un système de commande simple, comprenant un minimum de composants.

L'invention vise aussi à fournir, dans au moins un mode de réalisation, un système de commande avec une maintenance aisée.

L'invention vise aussi à fournir, dans au moins un mode de réalisation, un procédé et un système de commande compatibles avec des versions de turbomoteurs avec ou sans système de régulation du moteur de type FADEC (pour *Full Authority Digital Engine Control* en anglais).

### 4. Exposé de l'invention

Pour ce faire, l'invention concerne un procédé de commande d'un dispositif d'urgence d'un hélicoptère, ledit hélicoptère comprenant un rotor adapté pour être mis en rotation, ledit dispositif d'urgence étant adapté pour fournir un complément de puissance propulsive d'urgence à l'hélicoptère, ledit procédé comprenant les étapes suivantes :

- une étape de mesure de la vitesse de rotation du rotor de l'hélicoptère,
- une étape de calcul de la dérivée de la vitesse de rotation mesurée,
- une étape de détection d'une baisse de la vitesse de rotation du rotor à un instant t0 en dessous d'une vitesse $V_{NRnom}$ de rotation nominale du rotor de l'hélicoptère,
- une étape de déclenchement d'un minuteur mesurant la durée $\Delta t$ depuis l'instant t0, le minuteur étant activé tant que la vitesse de rotation du rotor est en baisse,
- étape de mesure à un instant t0+$\Delta t$ de la vitesse $V_{NR}$ de rotation du rotor,
- une étape de vérification en continu des conditions suivantes :

    - la vitesse de rotation du rotor est supérieure à une valeur prédéterminée, dite vitesse d'armement,
    - la dérivée de la vitesse de rotation est inférieure à une valeur prédéterminée, dite dérivée d'armement,
    - la dérivée de la vitesse de rotation à l'instant t0+dt est inférieure ou égale à :

$$\frac{V_{DEC} - V_{NR}}{\Delta t}$$

    - la dérivée de la vitesse de rotation à l'instant t0+$\Delta t$ est supérieure ou égale à :

$$\frac{V_{DEC} - V_{NRnom}}{\Delta t}$$

    avec $V_{DEC}$ la vitesse de décrochage du rotor de l'hélicoptère, en dessous de laquelle l'hélicoptère est en décrochage du fait de la perte de portance de l'hélicoptère.

- une étape d'activation du dispositif d'urgence si les conditions vérifiées sont validées.

Un procédé de commande selon l'invention permet donc de commander un dispositif d'urgence en appliquant certaines restrictions de sécurité permettant d'empêcher des déclenchements intempestifs dans des situations où l'activation du dispositif d'urgence n'est pas souhaitée. Le fait que la vitesse du rotor soit mesurée et non celle du moteur permet de commander le dispositif d'urgence selon une valeur ayant un lien important avec la portance de l'hélicoptère. En particulier, la vitesse de rotation du moteur n'est pas liée à la portance de l'hélicoptère, notamment lorsque celui-ci est éteint et que l'hélicoptère est en autorotation. Le procédé de commande permet de déclencher le dispositif d'urgence sans nécessiter d'action du pilote. En effet, dans certaines situations, le délai de réaction du pilote, même si celui-ci est rapide, serait trop important et risquerait d'entraîner le décrochage de l'hélicoptère.

En particulier, le procédé d'urgence vérifie les conditions précitées pour empêcher un déclenchement du dispositif d'urgence au sol : la mesure de la vitesse et la comparaison à une vitesse d'armement permet d'éviter de déclencher le dispositif d'urgence à l'arrêt, le rotor pouvant tourner à faible vitesse au sol du fait du vent par exemple. Le fait que le dispositif d'urgence ne se déclenche pas à faible vitesse du rotor (en dessous de la vitesse d'armement) n'a pas d'impact en vol car si la vitesse du rotor est trop faible, un déclenchement du dispositif d'urgence ne pourra de toute façon pas rétablir la vitesse du rotor nécessaire pour retrouver une portance.

La vitesse d'armement est comprise entre 50% à 70% de *la vitesse $V_{NRnom}$ nominale du rotor*. Dans tous les cas, la vitesse d'armement est inférieure à la vitesse de décrochage de l'hélicoptère, en dessous de laquelle l'hélicoptère est en décrochage du fait de la perte de portance de l'hélicoptère, et qui dépend du type d'hélicoptère et du rotor (notamment de ses pales).

La mesure de la dérivée de la vitesse de rotation du rotor et la comparaison à une dérivée d'armement permet d'éviter de déclencher le dispositif d'urgence lorsque l'hélicoptère a atterri et que le moteur est éteint, entrainant une réduction lente de la vitesse du rotor (notamment en roue libre, déconnecté du moteur). De préférence, la dérivée d'armement est égale à -10% de la vitesse $V_{NRnom}$ nominale du rotor par seconde. Dans tous les cas, cette valeur est négative, car les dérivées prises en compte dans le procédé de commande et pouvant nécessiter une activation du dispositif d'urgence sont celles relatives à une baisse de la vitesse de rotation du rotor.

Le dispositif d'urgence est par exemple un dispositif d'urgence tel que décrit dans la demande FR3019588 du demandeur, comprenant un générateur de gaz comprenant un bloc de propergol, permettant, à son activation, de générer du gaz alimentant une turbine de secours, la turbine de secours entrainant la rotation d'un arbre dont l'énergie mécanique peut être récupérée pour ajouter un complément de puissance au rotor entraîné par un turbomoteur.

Les cas pouvant entrainer le déclenchement du dispositif d'urgence sont notamment le début d'un arrêt en vol commandé ou non commandé, une manœuvre de type « arrondi » (ou *flare* en anglais) en fin de descente en autorotation, une demande soudaine de surplus de puissance dans des situations exceptionnelles (évitement d'obstacles inattendus, inversion de températures en altitude, rafale de vent, etc.).

Le procédé de commande permet en outre la vérification relative à la vitesse de décrochage de l'hélicoptère, afin de s'assurer que l'hélicoptère ne soit jamais en état de décrochage et d'anticiper une baisse de la vitesse de rotation du rotor qui entraînerai un décrochage.

La première condition vérifiée à l'instant t0+Δt relative au décrochage permet de déclencher le dispositif d'urgence si une baisse de la vitesse de rotation du rotor est assez importante pour laisser supposer que le rotor va atteindre rapidement la vitesse de décrochage, au-delà de laquelle il est difficile voire impossible de ré-augmenter la vitesse du rotor afin de retrouver une portance. Cette condition varie en fonction du temps, de sorte à ce que plus la vitesse de rotation reste en baisse longtemps, plus il y a de chances d'activer le dispositif d'urgence pour éviter d'atteindre la vitesse de décrochage.

La deuxième condition vérifiée à l'instant t0+Δt relative au décrochage permet d'éviter que le dispositif d'urgence soit activé si la vitesse de décrochage est déjà atteinte, rendant inutile le déclenchement du dispositif d'urgence.

La vitesse de décrochage est par exemple 80% de la vitesse de rotation nominale du rotor, de préférence entre 60% et 80% de la vitesse de rotation nominale du rotor. Cette vitesse de décrochage dépend des caractéristiques de l'hélicoptère et de son rotor.

D'autres conditions peuvent être vérifiées à l'étape de vérification.

Avantageusement et selon l'invention, l'étape de vérification vérifie la condition supplémentaire suivante :

- la dérivée de la vitesse de rotation est supérieure à une valeur prédéterminée, dite dérivée de désarmement.

Selon cet aspect de l'invention, cette condition supplémentaire permet d'éviter le déclenchement du dispositif d'urgence lorsque la valeur de la dérivée mesurée est manifestement erratique. En outre, cela évite aussi de déclencher le dispositif d'urgence en cas de panne du système de mesure de la dérivée ou en cas d'anomalie dynamique du signal de mesure.

De préférence, la dérivée de désarmement est inférieure à -500% de la vitesse $V_{NRnom}$ nominale du rotor par seconde. Dans tous les cas, la dérivée de désarmement est inférieure à -100% de la vitesse $V_{NRnom}$ nominale du rotor par seconde.

L'invention concerne également un système de commande d'un dispositif d'urgence d'un hélicoptère, ledit hélicoptère comprenant un rotor adapté pour être mis en rotation, ledit dispositif d'urgence étant adapté pour fournir un complément de puissance propulsive d'urgence à l'hélicoptère, caractérisé en ce qu'il comprend :

- une entrée adaptée pour recevoir une mesure de la vitesse de rotation du rotor de l'hélicoptère,

- des moyens de calculs adaptés pour mettre en œuvre le procédé de commande selon l'invention,
- une sortie d'allumage configurée pour transmettre un ordre d'activation au dispositif de commande si les conditions vérifiées sont validées par ledit procédé de commande.

Un système de commande selon l'invention permet donc de mettre en œuvre le procédé selon l'invention grâce à des moyens de calculs qui équipent l'hélicoptère. Ce système peut avantageusement être ajouté à l'hélicoptère comme équipement indépendant, permettant ainsi de réduire limiter les certifications nécessaires à ce système indépendant sans remettre en cause les certifications de l'hélicoptère. En particulier, le système de commande (et le dispositif d'urgence associés) peuvent être intégrés à un hélicoptère déjà volant, pour améliorer sa sécurité. En particulier, ne pas connecter le système de commande à un équipement de régulation déjà présent dans l'hélicoptère permet d'éviter de remettre en cause la tenue de l'équipement de régulation aux interférences électromagnétiques et à la foudre.

Le système comprend des moyens de calculs simples de type calculateur, ordinateur, circuit électronique combinatoire, intégré ou non, etc. Le système comprend ainsi peu de composant, est simple, et peut fonctionner en boucle ouverte. Sa maintenance est simple.

Selon d'autres variantes de l'invention, le système de commande peut être intégré totalement ou partiellement dans un équipement de commande de l'hélicoptère, par exemple dans le FADEC. Cette intégration permet de limiter le nombre d'équipements nécessaire mais nécessite toutefois une certification plus complexe.

L'invention est ainsi compatible avec les hélicoptères comprenant des turbomoteurs avec ou sans FADEC.

Avantageusement, le système de commande selon l'invention comprend une sortie d'état, adapté pour transmettre des informations relatives à l'état de marche du système de commande.

Selon cet aspect de l'invention, cette sortie permet de pouvoir contrôler l'état de marche du système de commande et donc de savoir si le dispositif d'urgence peut être activé ou non. Par exemple la sortie d'état peut donner les états suivants :

- ON : système de commande allumé,
- OFF : système de commande éteint,
- ALIM : système de commande alimenté,
- FAULT : système de commande en panne.

Avantageusement, le système de commande selon l'invention comprend une entrée d'alimentation adapté pour transmettre une énergie électrique permettant le fonctionnement des moyens de calcul et la transmission de l'ordre d'activation au dispositif de commande.

Selon cet aspect de l'invention, l'alimentation utilisée est par exemple l'alimentation de bord de l'hélicoptère et permet d'alimenter les moyens de calcul et d'effectuer l'ordre d'activation. La sortie d'allumage dispose ainsi d'une énergie électrique suffisante pour activer elle-même le dispositif d'urgence, par exemple pour former une étincelle, chauffer un composant, etc. qui permettront par exemple l'allumage d'un carburant de type propergol.

L'alimentation à laquelle est connectée l'entrée d'alimentation est par exemple un réseau de bord de type 28V DC et la sortie d'allumage délivre un signal de type 1A et 1W.

Selon d'autres variantes de l'invention, l'ordre d'activation est un signal numérique et le dispositif d'urgence comprend des moyens d'activation propre, alimentés séparément.

Avantageusement, le système de commande selon l'invention comprend une pluralité d'entrées adaptées pour recevoir des informations provenant de capteurs de l'hélicoptère et/ou des informations provenant de capteurs du dispositif d'urgence.

Les informations provenant de capteurs de l'hélicoptère sont par exemple :

- température ambiante,
- pression ambiante.

Les informations provenant de capteurs du dispositif d'urgence sont par exemple :

- température d'un bloc de propergol du dispositif d'urgence,
- vitesse de rotation d'une turbine de secours du dispositif d'urgence.

Le système de commande peut comprend en outre des sorties de commande d'équipements du dispositif d'urgence. Par exemple, la demande FR3026435 A1 du demandeur décrit un dispositif de test du dispositif d'urgence permettant d'injecter de l'air dans la turbine de secours pour tester son fonctionnement. L'air injecté provient de l'air circulant dans le turbomoteur et est injecté via un électro-clapet dérivant une partie de cet air : le système de commande peut contrôler cet électro-clapet pour effectuer le test d'intégrité mécanique de la turbine de secours.

Ces entrées et sorties permettent d'améliorer la testabilité et la disponibilité du système de commande.

L'invention concerne également un hélicoptère comprenant un rotor adapté pour être mis en rotation, caractérisé en ce qu'il comprend un dispositif d'urgence et un système de commande dudit dispositif d'urgence selon l'invention.

L'invention concerne également un procédé de commande, un système de commande et un hélicoptère caractérisés en combinaison par tout ou partie des caractéristiques mentionnées ci-dessus ou ci-après.

## 5. Liste des figures

D'autres buts, caractéristiques et avantages de l'invention apparaîtront à la lecture de la description suivante donnée à titre uniquement non limitatif et qui se réfère aux figures annexées dans lesquelles :

- la figure 1 est une vue schématique d'un procédé de commande selon un mode de réalisation de l'invention
- la figure 2 est une vue schématique d'un système de commande selon un premier mode de réalisation de l'invention,
- la figure 3 est une vue schématique d'un système de commande selon un deuxième mode de réalisation de l'invention,
- la figure 4 est une vue schématique d'un graphique représentant la zone d'activation du dispositif d'urgence commandé par un procédé de commande selon un mode de réalisation de l'invention, en fonction de la vitesse de rotation du rotor et de la dérivée de la vitesse de rotation du rotor.

## 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

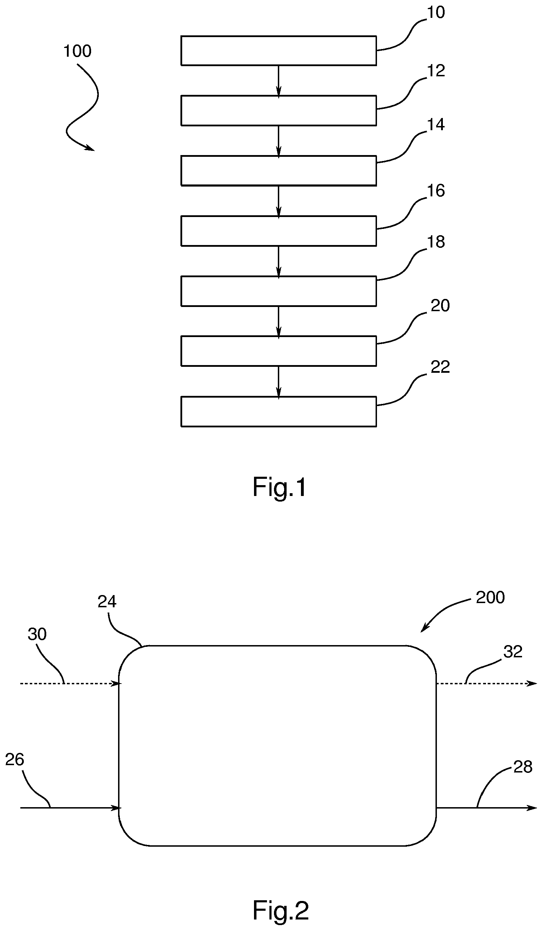

La figure 1 représente schématiquement un procédé de commande selon un mode de réalisation de l'invention, commandant un dispositif d'urgence d'un hélicoptère, ledit hélicoptère comprenant un rotor adapté pour être mis en rotation, ledit dispositif d'urgence étant adapté pour fournir un complément de puissance propulsive d'urgence à l'hélicoptère.

Le procédé 100 de commande comprend une première étape 10 de mesure de la vitesse de rotation du rotor de l'hélicoptère. Le procédé 100 de commande comprend ensuite une deuxième étape 12 de calcul de la dérivée de la vitesse de rotation mesurée, afin de détecter notamment une éventuelle baisse de la vitesse de rotation. Dans ce mode de réalisation, le procédé 100 de commande comprend en outre des étapes complémentaires, notamment une étape 14 de détection d'une baisse de la vitesse de rotation du rotor à un instant t0 en dessous d'une vitesse $V_{NRnom}$ de rotation nominale du rotor de l'hélicoptère, une étape 16 de déclenchement d'un minuteur mesurant la durée $\Delta t$ depuis l'instant t0, le minuteur étant activé tant que la vitesse de rotation du rotor est en baisse, et une étape 18 de mesure à un instant t0+ $\Delta$t de la vitesse $V_{NR}$ de rotation du rotor.

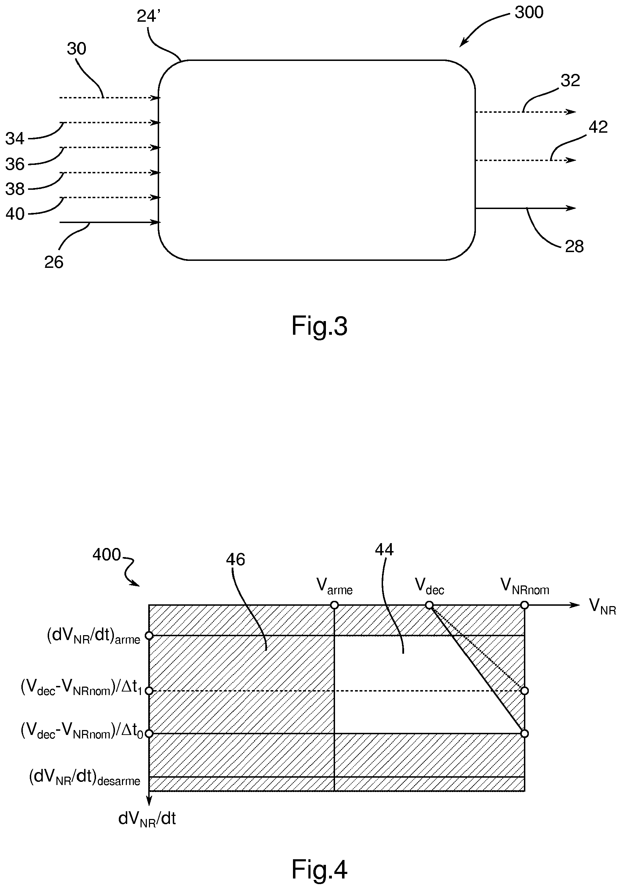

Le procédé 100 de commande comprend ensuite une étape 20 de vérification en continu de plusieurs conditions, décrites plus en détail plus loin en référence avec la figure 4. Enfin, si l'ensemble des conditions vérifiées sont validées, le procédé 100 de commande comprend une étape 22 d'activation du dispositif d'urgence.

La figure 2 représente schématiquement un système 200 de commande selon un premier mode de réalisation de l'invention, adapté pour mettre en œuvre un procédé de commande selon le mode de réalisation présenté à la figure 1.

Le système 200 de commande comprend des moyens 24 de calcul adapté pour mettre en œuvre le procédé de commande, qui peuvent consister par exemple en un calculateur, un circuit électronique intégré ou non, etc. Les moyens 24 de calcul sont reliés à une entrée 26 adaptée pour recevoir une mesure de la vitesse de rotation du rotor de l'hélicoptère et une sortie 28 d'allumage configurée pour transmettre un ordre d'activation au dispositif de commande si les conditions vérifiées sont validées par ledit procédé de commande.

En outre, dans ce premier mode de réalisation, le système de commande comprend une entrée 30 d'alimentation adapté pour transmettre une énergie électrique permettant le fonctionnement des moyens de calcul et la transmission de l'ordre d'activation au dispositif de commande et une sortie 32 d'état, adapté pour transmettre des informations relatives à l'état de marche du système de commande.

Dans un deuxième mode de réalisation, le système 300 de commande comprend des entrées supplémentaires reliées aux moyens 24' de calcul, notamment des entrées fournissant des informations provenant de capteurs de l'hélicoptère, par exemple :

- une entrée 34 fournissant la température ambiante,
- une entrée 36 fournissant la pression ambiante,

ou des entrées fournissant des informations provenant de capteurs du dispositif d'urgence, par exemple :

- une entrée 38 fournissant température d'un bloc de propergol du dispositif d'urgence
- une entrée 40 fournissant vitesse de rotation d'une turbine de secours du dispositif d'urgence

Le système 24' selon ce deuxième mode de réalisation peut en outre comprendre une sortie 42 de contrôle d'un électro-clapet de test du dispositif d'urgence tel que décrit dans la demande FR3026435 A1 du demandeur.

La figure 4 représente schématiquement un graphique 400 représentant la zone 44 d'activation du dispositif d'urgence commandé par un procédé de commande selon un mode de réalisation de l'invention, en fonction de la vitesse de rotation du rotor et de la dérivée de la vitesse de rotation du rotor.

La zone 44 d'activation correspond à une zone dans laquelle toutes les conditions vérifiées à l'étape de vérification sont validées. En particulier, les conditions vérifiées à l'étape de vérification délimitent une zone 44 d'activation représentée par un fond uni blanc entouré d'une zone 46 d'inhibition représentée par un fond hachuré. Les frontières entre les zones sont définies par les conditions suivantes vérifiées par le procédé de commande :

- la vitesse $V_{NR}$ de rotation du rotor est supérieure à une valeur prédéterminée, dite vitesse $V_{arme}$ d'armement,
- la dérivée d$V_{NR}$/dt de la vitesse de rotation est inférieure à une valeur prédéterminée, dite dérivée (d$V_{NR}$/dt)$_{arme}$ d'armement,
- la dérivée d$V_{NR}$/dt de la vitesse de rotation est supérieure à une valeur prédéterminée, dite dérivée (d$V_{NR}$/dt)$_{desarme}$ de désarmement,
- comme représenté par les deux droites obliques, la dérivée d$V_{NR}$/dt de la vitesse de rotation à l'instant t0+$\Delta$t est inférieure ou égale à :

$$\frac{V_{DEC} - V_{NR}}{\Delta t}$$

- la dérivée de la vitesse de rotation à l'instant t0+$\Delta$t est supérieure ou égale à :

$$\frac{V_{DEC} - V_{NRnom}}{\Delta t}$$

avec $V_{DEC}$ la vitesse de décrochage du rotor de l'hélicoptère, en dessous de laquelle l'hélicoptère est en décrochage du fait de la perte de portance de l'hélicoptère,

Les deux dernières conditions varient en fonction du temps mesuré par le minuteur, et sont représentés sur la figure 4 par :

- deux droites pleines pour un premier temps $\Delta t_0$ mesuré par le minuteur (les zones d'activation représentées correspondent à ce premier temps mesuré),
- deux droites en pointillés pour un deuxième temps $\Delta t_1$ mesuré par le minuteur (dans cette représentation, les zones d'activation et d'inhibition sont différentes de celles représentées et sont délimitées par les droites en pointillés).

Pour $\Delta$t = 0, la droite est verticale car le point $(V_{DEC} - V_{NRnom})/\Delta t$ est à l'infini.

**Revendications**

1. Procédé de commande d'un dispositif d'urgence d'un hélicoptère, ledit hélicoptère comprenant un rotor adapté pour être mis en rotation, ledit dispositif d'urgence étant adapté pour fournir un complément de puissance propulsive d'urgence à l'hélicoptère, ledit procédé comprenant les étapes suivantes :

   - une étape (10) de mesure de la vitesse de rotation du rotor de l'hélicoptère,
   - une étape (12) de calcul de la dérivée de la vitesse de rotation mesurée,
   - une étape (14) de détection d'une baisse de la vitesse de rotation du rotor à un instant t0 en dessous d'une vitesse $V_{NRnom}$ de rotation nominale du rotor de l'hélicoptère,
   - une étape (16) de déclenchement d'un minuteur mesurant la durée Δt depuis l'instant t0, le minuteur étant activé tant que la vitesse de rotation du rotor est en baisse,
   - une étape (18) de mesure à un instant t0+Δt de la vitesse $V_{NR}$ de rotation du rotor,
   - une étape (20) de vérification en continu des conditions suivantes :

      - la vitesse de rotation du rotor est supérieure à une valeur prédéterminée, dite vitesse d'armement,
      - la dérivée de la vitesse de rotation est inférieure à une valeur prédéterminée, dite dérivée d'armement,
      - la dérivée de la vitesse de rotation à l'instant t0+Δt est inférieure ou égale à :

$$\frac{V_{DEC} - V_{NR}}{dt}$$

      - la dérivée de la vitesse de rotation à l'instant t0+Δt est supérieure ou égale à :

$$\frac{V_{DEC} - V_{NRnom}}{\Delta t}$$

      avec $V_{DEC}$ la vitesse de décrochage du rotor de l'hélicoptère, en dessous de laquelle l'hélicoptère est en décrochage du fait de la perte de portance de l'hélicoptère,

   - une étape (22) d'activation du dispositif d'urgence si les conditions vérifiées sont validées.

2. Procédé de commande selon la revendication 1, **caractérisé en ce que** l'étape (20) de vérification vérifie la condition supplémentaire suivante :

   - la dérivée de la vitesse de rotation est supérieure à une valeur prédéterminée, dite dérivée de désarmement.

3. Système de commande d'un dispositif d'urgence d'un hélicoptère, ledit hélicoptère comprenant un rotor adapté pour être mis en rotation, ledit dispositif d'urgence étant adapté pour fournir un complément de puissance propulsive d'urgence à l'hélicoptère, **caractérisé en ce qu'**il comprend :

   - une entrée (26) adaptée pour recevoir une mesure de la vitesse de rotation du rotor de l'hélicoptère,
   - des moyens (24) de calculs adaptés pour mettre en œuvre le procédé de commande selon l'une des revendications 1 à 2,
   - une sortie (28) d'allumage configurée pour transmettre un ordre d'activation au dispositif de commande si les conditions vérifiées sont validées par ledit procédé de commande.

4. Système de commande selon la revendication 3, **caractérisé en ce qu'**il comprend une entrée (30) d'alimentation adapté pour transmettre une énergie électrique permettant le fonctionnement des moyens de calcul et la transmission de l'ordre d'activation au dispositif de commande.

5. Système de commande selon l'une des revendications 3 à 4, **caractérisé en ce qu'**il comprend une sortie (32) d'état, adapté pour transmettre des informations relatives à l'état de marche du système de commande.

6. Système de commande selon l'une des revendications 3 à 5, **caractérisé en ce qu'**il comprend une pluralité d'entrées adaptées pour recevoir des informations provenant de capteurs de l'hélicoptère et/ou des informations provenant de capteurs du dispositif d'urgence.

7. Hélicoptère comprenant un rotor adapté pour être mis en rotation, **caractérisé en ce qu'**il comprend un dispositif d'urgence et un système (200, 300) de commande dudit dispositif d'urgence selon l'une des revendications 3 à 6.

**Patentansprüche**

1. Verfahren zur Steuerung einer Notvorrichtung eines Helikopters, wobei der Helikopter einen Rotor umfasst, der angepasst ist, um in Drehung versetzt zu werden, wobei die Notvorrichtung angepasst ist, um dem Helikopter eine Notvortriebsleistungsergänzung bereitzustellen, wobei das Verfahren die folgenden Schritte umfasst:

- einen Schritt (10) zum Messen der Drehzahl des Rotors des Helikopters,
- einen Schritt (12) zum Berechnen der Ableitung der gemessenen Drehzahl,
- einen Schritt (14) zum Erfassen einer Verringerung der Drehzahl des Rotors zu einem Zeitpunkt t0 unter eine nominale Drehzahl $V_{NRnom}$ des Rotors des Helikopters,
- einen Schritt (16) zum Auslösen einer Zeituhr, die die Dauer $\Delta t$ ab dem Zeitpunkt t0 misst, wobei die Zeituhr aktiviert ist, solange sich die Drehzahl des Rotors verringert,
- einen Schritt (18) zum Messen zu einem Zeitpunkt t0+$\Delta t$ der Drehzahl $V_{NR}$ des Rotors,
- einen Schritt (20) zum fortlaufenden Überprüfen der folgenden Bedingungen:

- die Drehzahl des Rotors ist größer als ein vorbestimmter Wert, als Hochfahrableitung bezeichnet,
- die Ableitung der Drehzahl ist kleiner als ein vorbestimmter Wert, als Hochfahrableitung bezeichnet,
- die Ableitung der Drehzahl zum Zeitpunkt t0+$\Delta t$ ist kleiner oder gleich:

$$\frac{V_{DEC} - V_{NR}}{dt}$$

- die Ableitung der Drehzahl zum Zeitpunkt t0+$\Delta t$ ist größer oder gleich:

$$\frac{V_{DEC} - V_{NRnom}}{\Delta t}$$

mit $V_{DEC}$ als Überziehgeschwindigkeit des Rotors des Helikopters, unter der der Helikopter aufgrund des Verlustes der Auftriebskraft des Helikopters überzieht,

- einen Schritt (22) zum Aktivieren der Notvorrichtung, falls die überprüften Bedingungen bestätigt sind.

**2.** Verfahren zur Steuerung nach Anspruch 1, **dadurch gekennzeichnet, dass** der Schritt (20) zum Überprüfen die folgende zusätzliche Bedingung überprüft:

- die Ableitung der Drehzahl ist größer als ein vorbestimmter Wert, als Entwaffnungsableitung bezeichnet.

**3.** System zur Steuerung einer Notvorrichtung eines Helikopters, wobei der Helikopter einen Rotor umfasst, der angepasst ist, um in Drehung versetzt zu werden, wobei die Notvorrichtung angepasst ist, um dem Helikopter eine Notvortriebsleistungsergänzung bereitzustellen, **dadurch gekennzeichnet, dass** es umfasst:

- einen Eingang (26), der angepasst ist, um eine Messung der Drehzahl des Rotors des Helikopters zu empfangen,
- Mittel (24) für Berechnungen, die angepasst sind, um das Verfahren zur Steuerung nach einem der Ansprüche 1 bis 2 umzusetzen,
- einen Ausgang (28) zum Einschalten, der konfiguriert ist, um einen Auslösungsbefehl an die Vorrichtung zur Steuerung zu übertragen, falls die überprüften Bedingungen durch das Verfahren zur Steuerung bestätigt sind.

**4.** System zur Steuerung nach Anspruch 3, **dadurch gekennzeichnet, dass** es einen Eingang (30) zur Versorgung umfasst, der angepasst ist, um eine elektrische Energie zu übertragen, die den Betrieb der Mittel für Berechnungen und die Übertragung des Auslösungsbefehls an die Vorrichtung zur Steuerung ermöglicht.

**5.** System zur Steuerung nach einem der Ansprüche 3 bis 4, **dadurch gekennzeichnet, dass** es einen Ausgang (32) für einen Zustand umfasst, der angepasst ist, um Informationen in Bezug auf den Betriebszustand des Systems zur Steuerung zu übertragen.

**6.** System zur Steuerung nach einem der Ansprüche 3 bis 5, **dadurch gekennzeichnet, dass** es eine Vielzahl von Eingängen umfasst, die angepasst sind, um Informationen zu empfangen, die von Sensoren des Helikopters stammen, und/oder Informationen, die von Sensoren der Notvorrichtung stammen.

**7.** Helikopter, der einen Rotor umfasst, der angepasst ist, um in Drehung versetzt zu werden, **dadurch gekennzeichnet, dass** er eine Notvorrichtung und ein System (200, 300) zur Steuerung der Notvorrichtung nach einem der Ansprüche 3 bis 6 umfasst.

**Claims**

**1.** Control method for an emergency device of a helicopter, said helicopter comprising a rotor adapted to be rotated, said emergency device being adapted to supply additional emergency propulsive power to the helicopter,
said method comprising the following steps:

- a step (10) of measuring the rotation speed of the helicopter rotor,
- a step (12) of calculating the derivative of the measured rotation speed,
- a step (14) of detecting a drop in the rotation speed of the rotor at an instant to below the nominal rotation speed $V_{NRnom}$ of the helicopter rotor,
- a step (16) of activating a timer to measure the duration $\Delta t$ from the instant t0, the timer being activated as long as the rotation speed of the rotor is dropping,
- a step (18) of measuring at an instant t0 + $\Delta t$ the rotation speed of the rotor $V_{NR}$,
- a step (20) of continuously verifying the following conditions:

    - the rotation speed of the rotor is greater than a predetermined value, said arming speed,
    - the derivative of the rotation speed is greater than a predetermined value, said arming derivative,
    - the derivative of the rotation speed at instant t0+$\Delta t$ is lower than or equal to:

$$\frac{V_{DEC} - V_{NR}}{dt}$$

    - the derivative of the rotation speed at instant t0+$\Delta t$ is greater than or equal to:

$$\frac{V_{DEC} - V_{NRnom}}{\Delta t}$$

    with $V_{DEC}$ being the stall speed of the helicopter rotor, below which the helicopter is in stall due to the loss of lift of the helicopter,
    - an activation step (22) of the emergency device if the verified conditions are validated.

2. Control method according to claim 1, **characterised in that** the verification step (20) verifies the following additional condition:

    - the derivative of the rotation speed is greater than a predetermined value, called disarming derivative.

3. Control system for an emergency device of a helicopter, said helicopter comprising a rotor adapted to be rotated, said emergency device being adapted to supply additional emergency propulsive power to the helicopter, **characterised in that** it comprises:

    - an input (26) adapted to receive a measurement of the rotation speed of the helicopter rotor,
    - calculation means (24) adapted to carry out the control method according to one of the claims 1 to 2,
- an ignition output (28) configured to transmit an activation order to the control device if the verified conditions are validated by said control process.

4. Control system according to claim 3, **characterised in that** it comprises a supply input (30) adapted to transmit electrical energy which allows the calculation means to operate and to transmit the activation order to the control device.

5. Control system according to one of claims 3 to 4, **characterised in that** it comprises a status output (32), adapted to transmit information relative to the operating status of the control system.

6. Control system according to one of claims 3 to 5, **characterised in that** it comprises a plurality of inputs adapted to receive information from the helicopter sensors and/or information from the emergency device sensors.

7. Helicopter comprising a rotor adapted to be rotated, **characterised in that** it comprises an emergency device and a control system (200, 300) for the said emergency device according to one of claims 3 to 6.

Fig.1

Fig.2

Fig.3

Fig.4

**RÉFÉRENCES CITÉES DANS LA DESCRIPTION**

**Documents brevets cités dans la description**

- FR 3019588 A1
- EP 2703292 A
- FR 3019588
- FR 3026435 A1